# EUROPEAN PATENT APPLICATION

(11) **EP 1 486 579 A1**
(43) Date of publication of application: **15.12.2004**
(21) Application number: 04445060.9
(22) Date of filing: 14.05.2004
(51) Int. Cl.: C22C 29/04, C22C 1/05, C04B 35/634, B01F 17/00

(54) **Method of making titanium based carbonitride alloys**

(30) Priority: 13.06.2003 SE 0301745
(71) Applicant: SECO TOOLS AB, S-737 82 Fagersta (SE)
(72) Inventor: Kruse, Olof, 737 31 Fagersta (SE)
(74) Representative: Taquist, Lennart

(57) **Abstract**

The present invention pertains to environment-friendly and economic preparation, handling, and spray drying of slurries for the production of titanium based carbonitride alloys. The slurry is based on ethanol and water and comprises raw materials for the end product as well as polyethylene glycol (PEG) and a low concentration of polyethylenimine (PEI). The concentration of PEI is 0.1-0.7 % of the raw material weight. Hereby, slurries with low viscosities are produced which require less use of ethanol and energy, as well as manpower and equipment time in their preparation, handling, and spray drying.

## Description

The present invention relates to environment-friendly and economic preparation, handling, and spray drying of slurries for the production of titanium based carbonitride alloys, i.e., so called cermets.

Titanium based carbonitride alloys are composites comprising small grains (µm-scale) of at least one hard phase in a binder phase. The hard grains normally consist of a core with a surrounding rim. The core comprises Ti(C,N) or TiC. Grains may also consist of TiN in which case a rim is not present. The rim has a general composition (Ti,Me)(C,N) where Me generally indicates Ta, W, Nb, and Mo. In some commercially available materials, Zr and/or Hf is present at the Me position. Hard grains consisting of WC may also occur in commercial grades. Grains with WC composition do not exhibit core-rim structure. The binder phase usually consists of Co or Ni or an mixture thereof in which Mo, Ti, and W also are present as dissolved elements.

A common route in the industrial production of titanium based carbonitride alloys comprises blending of appropriate proportions of raw materials and additives with an alcohol (often ethanol) or water or a mixture thereof. The blend is then milled into a homogeneous slurry. The intention of the wet milling is to achieve deagglomeration of the raw materials and to homogenize the distribution of all constituents. Disintegration of individual raw material grains occurs to some extent. The slurry obtained in the milling process is dried and granulated, often in a spray drier. The obtained granulate is then used for making green bodies by uniaxial pressing, or for making pellets for injection moulding or extrusion.

The article "Dispersing WC-Co powders in aqueous media with polyethylenimine" (E Laarz and L Bergström, International Journal of Refractory Metals & Hard Materials, 18, 2000, p 281-286) describes the influence of PEI (polyethylenimine, a cationic polyelectrolyte) in slurries of tungsten carbide and cobalt in water. Above concentrations of 0.3 % with respect to dry powder weight (wt%), PEI acts as a dispersant.

EP-A-1153652 relates to the preparation of dispersed suspensions of WC and Co in water or water-ethanol mixtures using PEI. In water based slurries with 3.5 wt% PEG (polyethylene glycol) present, a dispersing effect of PEI was reported at concentrations above 0.3 wt%. For mixtures of water and ethanol, the lowest concentration of PEI stated to have dispersing effect was 0.3 wt%. The slurry was made from a mixture of 90 wt% ethanol and 10 wt% water with WC, TiC, TaC, TiN, and Co powders. A concentration range of a polyethylenimine-based polyelectrolyte of 0.1 - 10 wt% is claimed.

Swedish patent application 0104309-0 relates to the addition of low concentrations (0.01-<0.1 wt%) of PEI to slurries containing ethanol, water, PEG, and powdered raw materials for the production of tungsten carbide based hard metals. The addition gives a radical decrease in slurry viscosity. This effect can be used to decrease the volume of milling liquid, the milling time, the rinsing liquid volume, and energy use on slurry drying. A concentration range of 0.01-<0.1 wt% of a polyethylenimine-based polyelectrolyte is claimed.

Swedish patent application 0203559-0 relates to the addition of low concentrations (0.01-1 wt%) of PEI to slurries containing ethanol, water, stearic acid, and powdered raw materials for the production of tungsten carbide based hard metal tools by powder injection moulding. The addition of PEI to the slurry gives a decrease in slurry viscosity and thus higher powder loadings can be used. A concentration range of 0.04-0.20 wt% of PEI in slurry is claimed.

The processes included in the known routes to produce titanium based carbonitride alloys require ethanol, energy, and also equipment and manpower time. It is an object of the present invention to provide a method for making such alloys which decreases these requirements for ecological and economical reasons.

It has now surprisingly been found that an addition of 0.1-0.7 wt% PEI to slurries containing ethanol, water, PEG, and powdered raw materials for the production of titanium based carbonitride alloys gives a radical decrease in slurry viscosity. The slurries so obtained may hence be more concentrated. Thus, smaller amounts of ethanol-water mixture may be used both for milling and for the following rinsing of the mill. Additionally, milling time and energy requirement in the following drying of the slurry is decreased. By choice, the decrease in viscosity can be used solely for decreasing the use of ethanol-water (with milling time kept constant) or the milling time (with ethanol-water volume constant).

The invention relates to the preparation, handling, and spray drying of slurries used for the production of titanium based carbonitride alloys with all conventional grain sizes. However, it is particularly useful for grain sizes of 1-5 µm. For application in slurries containing raw materials often used in the production of titanium based carbonitride alloys, i.e., Ti(C,N), TiN, WC; TaC, NbC or combinations thereof, i.e., (Ta,Nb)C; Co, Ni, and Mo, the PEI concentration in relation to raw material weight is 0.1-0.7 %, preferably 0.25-0.40 %. The molecular weight (Mw) of the PEI is 1 000-50 000, preferably 10 000-30 000. More particularly, during milling the standard slurry consists of a suspension of 72-81 wt% of powdered raw materials (computed on combined weight of raw materials and liquid), more preferably 74-79 wt%, in a liquid composed of ethanol (80-90 wt%) and water. With PEI present, the milling slurry consists of 74-84 wt% of powdered raw materials, preferably 76-82 wt%. After emptying and rinsing the mill, the standard slurry consists of 58-68 wt% raw materials, preferably 60-66 wt%. With PEI present, this slurry consists of 61-71 wt% raw materials, preferably 63-69 wt%. In addition to the above mentioned raw materials, minor amounts of carbon black or tungsten metal may be added in order to control the carbon concentration in the sintered material. In the ethanol used, 4 wt% methyl ethyl ketone (MEK) is included. The PEG concentration is 2.5-4.5 % of the powder raw material weight. The average molecular weight of the PEG is 1 000-6 000.

### Example 1

Viscosity measurements were made on a slurry containing raw material for the production of a titanium based carbonitride alloy. The raw material consisted of 51.6 wt% Ti(C,N) with a grain size according to FSSS of 2-5 µm and a C/N weight ratio of 0.9, 18.6 wt% WC with a milled grain size (FSSS) of about 1.4 µm, 13.0 wt% (Ta,Nb)C with a grain size (FSSS) of maximum 3.0 µm and a Ta/Nb weight ratio of 9.2, 8.9 wt% Co with a grain size (FSSS) of maximum 2.0 µm, 4.4 wt% Ni, 2.3 wt% TiN with a grain size (FSSS) of maximum 2.0 µm, and 0.4 wt% Mo. In addition, 0.9 wt% carbon black was added in order to obtain desired carbon concentration in the resulting sintered product. Polyethylene glycol as PEG3400 and PEG1500 were added with 2.1 and 1.4 % respectively of the raw material weight. The liquid phase in the slurry consisted of a mixture of ethanol (84 wt%) and deionized water. The solids loading of the slurry was 76 wt%, computed from the raw material weight. Viscosity measurements were made with continuous agitation of the slurry at room temperature. The viscometer was a Contraves unit (1814, TVB) giving the measured viscosity in arbitrary units specific for the equipment. A water solution (30 wt%) of PEI was added into the slurry which was kept in a beaker during measurements. The solution was prepared by dissolving PEI (from Sigma-Aldrich Sweden, product no. 40,872-7) in deionized water. The average molecular weight of the PEI was 25 000. Before adding the PEI solution, the measured viscosity was 83 units. Upon adding PEI solution, the viscosity values decreased to 28 units in the PEI concentration range 0.25-0.40 wt%. Upon continued addition of PEI solution, the viscosity gradually increased to 35 units at 0.7 wt%. Further addition up to 1.5 wt% gave viscosities in the range 60-65 units.

### Example 2

A test in full-scale production was made in the following way. A batch of raw materials for the production of a titanium based carbonitride alloy as described in Example 1 was loaded into a ball mill with PEG and a mixture of ethanol and water as specified in Example 1. Into the mill, a 30 wt% water solution of PEI was added so that the PEI concentration was 0.35 % with respect to the raw material weight. With respect to the standard value, the added liquid volume was reduced by 15 %. The milling time was reduced by 25 %. After milling, the slurry viscosity was measured on a sample from the mill. The result obtained was 48 units whereas a slurry obtained by using standard liquid volume and milling time and the same raw materials had a viscosity of 72 units. Since the viscosity of the milled slurry was low, emptying of the mill required 10 % less ethanol-water mixture than in the standard case. The total slurry volume, including the rinsing liquid, was hereby decreased by 10 %. The viscosity of this slurry was 14 units. The corresponding standard slurry had a viscosity of 21 units. The decrease in slurry volume led to a decrease in spray dryer run time of 9 %. The granulate obtained by spray drying had at least the same flowability and low dusting as standard granulate. Pressing performance was equal to that obtained using standard granulate. The material obtained after sintering had properties equal to standard material.

## Claims

1. Method of making titanium based carbonitride alloys with a binder phase based on Co and/or Ni by powder metallurgical methods including wet milling in alcohol or water or a mixture thereof of powder and pressing agent to form a slurry, drying the slurry to form a granulate by spray drying, pressing the granulate to form bodies of desired shape and dimension and finally sintering, **characterised in** adding to the slurry 0.1-0.7 wt% of a polyethylenimine-based polyelectrolyte and that the pressing agent consists of polyethylene glycol in an amount of 1.0-5.0 % of the powder raw material weight.

2. Method according to claim 1, **characterised in** adding 0.25-0.40 wt% of a polyethylenimine-based polyelectrolyte to the slurry.

3. Method according to any of the preceding claims, **characterised in that** the average molecular weight of the polyethylenimine-based polyelectrolyte is 1 000 to 50 000.

4. Method according to claim 3, **characterised in that** the average molecular weight of the polyethylenimine-based polyelectrolyte is 10 000 to 30 000.

5. A slurry with viscosity suitable for spray drying intended for manufacturing of titanium based carbonitride alloy bodies **characterised in** containing 0.1-0.7 wt% of a polyethylenimine-based polyelectrolyte and polyethylene glycol in an amount of 1.0-5.0 % of the powder raw material weight.

6. A slurry according to claim 5, **characterised in** containing 0.25-0.4 wt% of a polyethylenimine-based polyelectrolyte.

7. A slurry according to claim 5 or 6, **characterised in that** the average molecular weight of the polyethylenimine-based polyelectrolyte is 1 000 to 50 000.

8. A slurry according to claim 7, **characterised in that** the average molecular weight of the polyethylenimine-based polyelectrolyte is 10 000 to 30 000.
